(19) Europäisches Patentamt
European Patent Office
Office européen des brevets

(11) Publication number: 0 410 543 A2

(12) EUROPEAN PATENT APPLICATION

(21) Application number: 90202044.5

(51) Int. Cl.5: C08G 67/02

(22) Date of filing: 25.07.90

(30) Priority: 26.07.89 NL 8901929
26.07.89 NL 8901927

(43) Date of publication of application:
30.01.91 Bulletin 91/05

(84) Designated Contracting States:
BE DE FR GB IT NL

(71) Applicant: SHELL INTERNATIONALE RESEARCH MAATSCHAPPIJ B.V.
Carel van Bylandtlaan 30
NL-2596 HR Den Haag(NL)

(72) Inventor: Wong, Pui Kwan
Carel van Bylandtlaan 30
NL-2596 HR The Hague(NL)
Inventor: Drent, Eit
Badhuisweg 3
NL-1031 CM Amsterdam(NL)
Inventor: Pino, Piero

deceased(CH)
Inventor: Corradini, Paolo
Via Mezzaconnone 4
I-80134 Napoli(IT)
Inventor: Petrucci, Giorgio
Via della Mattonaia, 32
I-50121 Firenze(IT)

(74) Representative: Aalbers, Onno et al
P.O. Box 302
NL-2501 CH The Hague(NL)

(54) **Process for increasing the stereoregularity of a polymer mixture.**

(57) Process for increasing the stereoregularity of a syndiotactic or isotactic polymer mixture in which the average stereoregularity of a syndiotactic or isotactic mixture of linear alternating copolymers of carbon monoxide with a monomer of the general formula $CH_2=CH-R$, wherein R represents an optionally polarly substituted hydrocarbyl group, which copolymers differ from one another in stereoregularity, is increased by treating the copolymer mixture with a solvent in which the copolymers display a higher degree of solubility according as their stereoregularity is lower.

EP 0 410 543 A2

# PROCESS FOR INCREASING THE STEREOREGULARITY OF A POLYMER MIXTURE

The invention relates to a process for increasing the stereoregularity of a polymer mixture.

Linear copolymers of carbon monoxide with ethene, in which the units originating in carbon monoxide on the one hand and the units originating in ethene on the other hand occur substantially in alternating order, can be prepared by contacting the monomers with a catalyst composition which comprises palladium and a bidentate ligand which can form a complex with palladium via two phosphorus, nitrogen or sulphur containing dentate groups present in the bidentate ligand.

For the structure of the copolymers obtained it makes no difference whether they are prepared by using a catalyst composition which contains a phosphorus, a nitrogen or a sulphur bidentate ligand. In all these cases the same linear alternating carbon monoxide/ethene copolymers are obtained.

The Applicant has recently carried out an investigation into the use of the afore-mentioned catalyst compositions in the preparation of linear alternating copolymers of carbon monoxide with a monomer of the general formula $CH_2=CH-R$, wherein R represents an optionally polarly substituted hydrocarbyl group. It was found that such copolymers can indeed be prepared but, contrary to what was observed earlier during the preparation of carbon monoxide/ethene copolymers, the structure of the copolymers obtained is greatly influenced by the type of bidentate ligand present in the catalyst composition.

In the polymerization of carbon monoxide with a monomer $CH_2=CH-R$, wherein R represents an optionally polarly substituted aliphatic hydrocarbyl group, by using a catalyst composition comprising a symmetrical phosphorus bidentate ligand of the general formula $(R^1)_2P-R^2-P(R^1)_2$, wherein $R^1$ is an optionally polarly substituted hydrocarbyl group and $R^2$ is a bivalent organic acyclic bridging group which has at least two carbon atoms in the bridge that connects the two phosphorus atoms, the structure of the copolymers obtained is dependent on the nature of the bidentate ligand. When a bidentate ligand is used in which $R^1$ is aromatic, such as 1,3-bis[bis(2-methoxyphenyl)phosphino]propane, the copolymers obtained are regio-irregular, whereas when a bidentate ligand is used in which $R^1$ is aliphatic, such as 1,3-bis(di-n-butylphosphino)propane, the copolymers obtained are regioregular and stereo-irregular.

According to non-prepublished European patent application No. 90200322.7, the polymerization of carbon monoxide with a monomer $CH_2=CH-R$, wherein R represents an optionally polarly substituted aliphatic hydrocarbyl group, by using a catalyst composition comprising an asymmetrical phosphorus bidentate ligand of the general formula $(R^1)_2P-R^3-P(R^1)_2$, wherein $R^1$ is an optionally polarly substituted hydrocarbyl group and $R^3$ is a bivalent organic bridging group connecting the two phosphorus atoms which has at least two carbon atoms in the bridge which together form part of a cyclic structure, such as trans-4,5-bis(diphenylphosphinomethyl)-2,2-dimethyl-1,3-dioxolane, results in copolymers that are stereo-regular.

The polymerization of carbon monoxide with a monomer $CH_2=CH-R$, wherein R represents an optionally polarly substituted aromatic hydrocarbyl group, by using a catalyst composition comprising a sulphur bidentate ligand of the general formula $R^1S-R^2-SR^2$, wherein $R^1$ is an optionally polarly substituted hydrocarbyl group and $R^2$ is a bivalent organic bridging group which has at least two carbon atoms in the bridge that connects the two sulphur atoms, such as cis-1,2-bis(benzylthio)ethene, results in copolymers which are regioregular and stereo-irregular.

The polymerization of carbon monoxide with a monomer $CH_2=CH-R$, wherein R represents an optionally polarly substituted aromatic hydrocarbyl group, by using a catalyst composition comprising a nitrogen bidentate ligand of the general formula

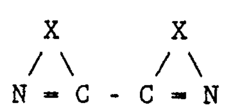

wherein X represents an organic bridging group containing three or four atoms in the bridge at least two of which are carbon atoms, such as 2,2′-bipyridine or 1,10-phenanthroline, results in copolymers which are stereoregular.

The terms regioregular and regio-irregular refer to the way in which the units originating in a monomer $CH_2=CH-R$ occurring within the polymer chains are bound to the units originating in carbon monoxide. Three possibilities are distinguishable, which are termed "head/head", "tail/tail" and "head/tail". They may be represented schematically as follows:

head/head: $-(CH_2)-(CHR)-(CO)-(CHR)-(CH_2)-$

tail/tail: $-(CHR)-(CH_2)-(CO)-(CH_2)-(CHR)-$

head/tail: $-(CH_2)-(CHR)-(CO)-(CH_2)-(CHR)-$

Regio-irregular copolymers are understood to be copolymers in which the afore-described configurations occur in an average ratio of about 1:1:2, i.e. the units originating in the monomer $CH_2=CH-R$ are bound in a head/tail fashion to an average of about 50% of the units originating in carbon monoxide. Regio-regular copolymer are understood to be copolymers in which the units originating in the monomer $CH_2=CH-R$ are bound to the units originating in carbon monoxide substantially in a head/tail fashion.

The terms stereoregular and stereo-irregular used hereinbefore refer to the configuration of the asymmetrical carbon atoms present in the regioregular copolymer chains relative to the configuration of the asymmetrical carbon atoms together with which they form part of a diad. A diad in this connection is understood to be a segment of the polymer chain which is made up of two asymmetrical carbon atoms which are interconnected through a $-(CH_2)-(CO)-$ bridge. If there are n asymmetrical carbon atoms in a regioregular $CO/CH_2=CH-R$ copolymer chain, then n-1 of such diads will be discernible therein. As regards the relation between the configurations of the two asymmetrical carbon atoms of a diad, two possibilities are distinguishable, which are referred to as "isotactic" and "syndiotactic". 'When the two asymmetrical carbon atoms in a diad have the same configuration this diad is called an isotactic diad, whereas the diad is called syndiotactic when the configurations are opposed. These options can be schematically represented as

isotactic: 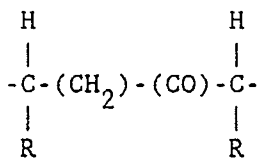

syndiotactic: 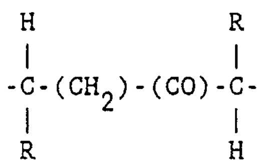

On the basis of the relation between the number of isotactic and syndiotactic diads present, the regioregular copolymer mixtures obtained in the polymerization of carbon monoxide with a monomer $CH_2=CH-R$ can be divided into three classes as follows.

1) Polymer mixtures in which the number of isotactic diads is substantially equal to the number of syndiotactic diads are referred to as atactic polymer mixtures.

2) Polymer mixtures in which the number of isotactic diads is larger than the number of syndiotactic diads are referred to as isotactic polymer mixtures.

3) Polymer mixtures in which the number of syndiotactic diads is larger than the number of isotactic diads are referred to as syndiotactic polymer mixtures.

The atactic polymer mixtures mentioned under 1) are stereo-irregular, whereas the other regioregular polymer mixtures mentioned above possess stereoregularity. The degree of stereoregularity of the polymer mixtures is expressed as the average stereoregularity, which for the isotactic polymer mixtures is understood to be the percentage of isotactic diads and for the syndiotactic polymer mixtures the percentage of syndiotactic diads, both calculated on the total number of diads present in the polymer mixtures. On the basis of these definitions, both the syndiotactic and the isotactic polymer mixtures have an average stereoregularity of more than 50%.

By an appropriate choice of the catalyst composition and of the polymerization conditions stereo-irregular polymer mixtures as mentioned hereinbefore under 1), as well as stereoregular polymer mixtures as mentioned hereinbefore under 2) and 3) can be prepared by polymerizing carbon monoxide with a monomer $CH_2=CH-R$. For example, atactic polymer mixtures are obtained in the polymerization of carbon monoxide with a monomer $CH_2=CH-R$ in which R represents an optionally polarly substituted aromatic hydrocarbyl group by using a catalyst composition which comprises a sulphur bidentate ligand of the general formula $R^1S-R^2-SR^1$ whilst the use of a catalyst composition which comprises a nitrogen bidentate ligand of the general formula

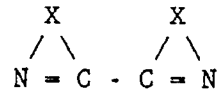

results in syndiotactic polymer mixtures. As a further example may be mentioned that atactic polymer mixtures are obtained in the polymerization of carbon monoxide with an aliphatic monomer $CH_2=CH-R$ as described above by using a catalyst composition comprising a symmetrical phosphorus bidentate ligand of the general formula $(R^1)_2P-R^2-P(R^1)_2$, wherein $R^1$ is aliphatic, whilst the use of a catalyst composition which comprises an asymmetrical phosphorus bidentate ligand of the general formula $(R^1)_2P-R^3-P(R^1)_2$ results in isotactic polymer mixtures.

For some applications of the regioregular $CO/CH_2=CH-R$ polymer mixtures, preference may be given to atactic polymer mixtures. For other applications, there may be more need for syndiotactic or isotactic polymer mixtures with a certain average stereoregularity. Although a number of these different polymer mixtures can be prepared by an appropriate choice of the catalyst composition and of the polymerization conditions, it would be desirable to be able to prepare from a syndiotactic or isotactic polymer mixture with a certain average stereoregularity, syndiotactic or isotactic polymer mixtures, respectively, with a higher or lower average stereoregularity, or to be able to convert these polymer mixtures into atactic polymer mixtures.

During an investigation into this subject, two processes were found which offer the opportunity of realizing these shifts in stereoregularity. According to one process, which constitutes the subject matter of the present patent application, the average stereoregularity of isotactic and syndiotactic polymer mixtures can be increased. According to the other process, which is the subject matter of Netherlands patent application No. 8901928, the average stereoregularity of isotactic and syndiotactic polymer mixtures can be reduced, and these polymer mixtures can be converted into atactic polymer mixtures, if desired.

The present invention is based upon the finding that the stereoregularity of the polymer molecules present in a syndiotactic or isotactic polymer mixture can display a degree of solubility in certain solvents (hereinafter to be referred to as "selective solvents") which is higher according as their stereoregularity is lower. By treating a syndiotactic or isotactic polymer mixture with such a selective solvent, the polymer molecules with relatively the lowest stereoregularities will be removed therefrom, and, as a consequence, a syndiotactic or isotactic polymer mixture with a higher average stereoregularity remains behind.

The present patent application therefore relates to a process for increasing the stereoregularity of a syndiotactic or isotactic polymer mixture, characterized in that the average stereoregularity of a syndiotactic or isotactic mixture of linear alternating copolymers of carbon monoxide with a monomer of the general formula $CH_2=CH-R$, wherein R is an optionally polarly substituted hydrocarbyl group, which copolymers differ from one another in stereoregularity, is increased by treating the polymer mixture with a selective solvent.

The patent application further relates to syndiotactic mixtures of linear alternating polymers of carbon monoxide with a monomer of the general formula $CH_2=CH-R$, wherein R represents an optionally polarly substituted aromatic hydrocarbyl group, which mistures have an average syndiotacticity of at least 90%.

The treatment of the polymer mixture with a selective solvent according to the invention can be carried out in two different ways. In the first place, the polymer mixture as such can be treated with a selective solvent by extracting it with this solvent, during which extraction the polymer molecules with relatively the lowest stereoregularity dissolve. The product obtained upon removal of the solution obtained is a polymer mixture which has a higher average stereoregularity than the original polymer mixture. The polymer mixture can also be completely dissolved and the solution thus obtained treated with a selective solvent by adding this solvent to the solution, during which treatment the polymer molecules with relatively the highest stereoregularity precipitate from the solution. Likewise, the product obtained upon removal of the remainder of the solution, which contains the polymer molecules with relatively the lowest stereoregularity, is a polymer mixture which has a higher average stereoregularity than the original polymer mixture.

In the process of the invention, a syndiotactic or isotactic polymer mixture with a given average stereoregularity is treated with a selective solvent, the product obtained being a syndiotactic or isotactic polymer mixture, respectively, having a higher average stereoregularity. If desired, the treatment may be carried out in two or more steps, in which different treating temperatures and/or different selective solvents may be used.

As examples of selective solvents which may be used according to the invention to increase the stereoregularity of syndiotactic or isotactic mixtures of $CO/CH_2=CH-R$ copolymers may be mentioned, inter alia, ketones, such as acetone, methyl ethyl ketone and methyl isobutyl ketone, cyclic ethers, such as

tetrahydrofuran and dioxane, aromatic hydrocarbons, suoh as benzene, halogenated hydrocarbons, such as chloroform, and esters, such as ethyl acetate. Favourable results can be achieved when stereoregular mixtures of $CO/CH_2=CH\text{-}R$ copolymers are subjected to any one of the following treatments

a) extraction with methyl ethyl ketone at room temperature,

b) first, extraction with methyl ethyl ketone at boiling temperature, followed by a second extraction of the extracted polymer mixture with methyl isobutyl ketone at room temperature, and

c) first, extraction with methyl ethyl ketone at room temperature, followed by a second extraction of the extracted polymer mixture with dioxane at room temperature.

As was stated hereinbefore, the process of the invention can be carried out not only by extracting the polymer mixture as such with a selective solvent, but also by dissolving the polymer mixture completely and then adding a selective solvent to the solution obtained. If it is intended to carry out the process of the invention in this manner, the starting polymer mixture can be very suitably dissolved in ortho-chlorophenol or hexafluoroisopropanol.

If the polymer mixture of which it is intended to increase the average stereoregularity according to the invention includes relatively low molecular weight material, this may be removed therefrom by extracting the polymer mixture with a lower aliphatic alcohol, such as methanol, preferably at the boiling temperature of the lower aliphatic alcohol.

Both syndiotactic and isotactic polymer mixtures are polymer mixtures to which the process of the invention can suitably be applied. In the monomer of the general formula $CH_2=CH\text{-}R$, in which R represents an optionally polarly substituted hydrocarbyl group, this hydrocarbyl group may be aliphatic or aromatic.

In one embodiment, the process of the invention is applied to a syndiotactic mixture of $CO/CH_2=CH\text{-}R$ copolymers in which R represents an optionally polarly substituted aromatic hydrocarbyl group. More specifically, preference is given to the application of the process of the invention to such a polymer mixture as has been prepared by contacting a mixture of carbon monoxide and a monomer $CH_2=CH\text{-}R$ in which R represents an optionally polarly substituted aromatic hydrocarbyl group, at an elevated temperature and pressure with a solution of a catalyst composition in a diluent in which the polymers are insoluble or virtually insoluble, which catalyst composition is based upon

a) a palladium compound, such as palladium acetate or palladium trifluoroacetate,

b) an acid with a pka of less than 2, such as para-toluene-sulphonic acid,

c) a nitrogen bidentate ligand of the general formula

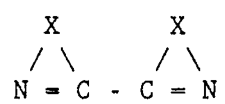

where X represents an organic bridging group containing three or four atoms in the bridge at least two of which are carbon atoms, such as 2,2′-bipyridine or 1,10-phenanthroline, and

d) an organic oxidant, such as 1,4-benzoquinone or 1,4-naphthoquinone.

Preferably, such a catalyst composition is employed as comprises 1-100 mol of component b), 1-50 mol of component c) and 10-5000 mol of component d) per mol of palladium. Preferably, the polymerization with the aid of this catalyst composition is carried out at a temperature of 30-150 °C, a pressure of 20-100 bar, a molar ratio of the monomer $CH_2=CH\text{-}R$ relative to carbon monoxide of from 5:1 to 1:2, and by using a quantity of catalyst composition which comprises $10^{-6}$-$10^{-4}$ mol of palladium per mol of monomer $CH_2=CH\text{-}R$ to be polymerized.

In another embodiment, the process of the invention is applied to an isotactic mixture of $CO/CH_2=CH\text{-}R$ copolymers in which R represents an optionally polarly substituted aliphatic hydrocarbyl group. More specifically, preference is given to the application of the process of the invention to such a polymer mixture as has been prepared by contacting a mixture of carbon monoxide and a monomer $CH_2=CH\text{-}R$ in which R represents an optionally polarly substituted aliphatic hydrocarbyl group, at an elevated temperature and pressure with a solution of a catalyst composition in a diluent in which the polymers are insoluble or virtually insoluble, which catalyst composition is based upon

aa) a palladium compound, such as palladium acetate,

bb) an acid with a pKa of less than 2, such as para-toluenesulphonic acid or trifluoroacetic acid,

cc) an asymmetrical phosphorus bidentate ligand of the general formula $(R^1)_2P\text{-}R^3\text{-}P(R^1)_2$ wherein $R^1$ is an optionally polarly substituted hydrocarbyl group and $R^3$ is a bivalent organic bridging group connecting the two phosphorus atoms which has at least two carbon atoms in the bridge which together

form part of a cyclic structure, such as trans-4,5-bis(diphenylphosphinomethyl)-2,2-dimethyl-1,3-dioxolane, and

dd) optionally, an organic oxidant, such as 1,4-benzoquinone or 1,4-naphthoquinone.

Preferably, the latter catalyst composition comprises 1-25 mol of component bb), 0.75-1.5 mol of component cc) and, optionally, 5-1000 mol of component dd) permol of palladium. Preferably, the polymerization with the aid of the latter catalyst composition is carried out at a temperature of 30-85 °C, a pressure of 20-100 bar, a molar ratio of the monomer $CH_2=CH\text{-}R$ relative to carbon monoxide of from 5:1 to 1:5, and by using a quantity of catalyst composition which comprises $10^{-6}$-$10^{-4}$ mol of palladium per mol of $CH_2=CH\text{-}R$ to be polymerized.

The invention will now be illustrated by the following examples.

Example 1

A carbon monoxide/styrene polymer mixture was prepared as follows. An autoclave with a capacity of 500 ml was charged with a catalyst solution which comprised

20 ml methanol,

0.2 mmol palladium trifluoroacetate,

0.3 mmol 2,2′-bipyridine,

0.15 mmol para-toluenesulphonic acid, and

20 mmol 1,4-benzoquinone.

100 ml of styrene was introduced into the autoclave, followed by carbon monoxide, until a pressure of 40 bar was reached. Finally, the contents of the autoclave were brought to 70 °C. Polymerization was terminated after 3 hours by cooling the reaction mixture to room temperature and releasing the pressure. The polymer mixture was filtered off, washed with cold methanol and dried at a pressure of 125 mbar (12.5 kPa) and a temperature of 60 °C. The product was 25.81 g of polymer mixture. With the aid of $^{13}C$-NMR analysis it was established that the syndiotactic polymer mixture thus prepared had an average syndiotacticity of less than 85%. The polymer mixture was purified by dissolving in hexafluoroisopropanol, filtering the solution and precipitating the polymer mixture with methanol. The polymer mixture thus purified had an intrinsic viscosity of 0.068 dl/g determined in ortho-chlorophenol at 60 °C. The purified polymer mixture was extracted with boiling methanol for 24 hours. During this treatment 9.6 %w of the polymer mixture dissolved. Subsequently, the residue of the methanol extraction was extracted for 24 hours with methyl ethyl ketone. During this treatment 27.7 %w of the polymer mixture dissolved. The extract of the methyl ethyl ketone extraction was evaporated in vacuo to dryness and the remaining polymer mixture was dried at a pressure of 125 mbar (12.5 kPa) and a temperature of 60 °C. X-ray analysis showed that this polymer mixture had a very low crystallinity.

The polymer mixture obtained as the residue in the methyl ethyl ketone extraction had an average molecular weight (Mn) of 3600, determined by vapour pressure osmometry in ortho-chlorophenol at 80 °C. X-ray analysis showed that this polymer mixture was highly crystalline and had an identity period of 7.5-7.6 Å (0.75-0.76 nm). With the aid of $^{13}C$-NMR analysis it was established that the syndiotactic polymer mixture thus prepared had an average syndiotacticity of about 90%.

Example 2

A carbon monoxide/styrene polymer mixture was prepared substantially in the same way as in Example 1, except for the following differences

a) a catalyst solution was employed which comprised 100 ml of methanol,

0.2 mmol of palladium acetate,

0.3 mmol of 1,10-phenanthroline,

0.60 mmol of para-toluenesulphonic acid, and

30 mmol of 1,4-naphthoquinone,

b) 20 ml of styrene was introduced into the autoclave instead of 100 ml,

c) the reaction temperature was 85 °C instead of 70 °C, and

d) the reaction time was 5 hours instead of 3 hours.

The product was 11.16 g of polymer mixture. With the aid of $^{13}C$-NMR analysis it was established that the syndiotactic polymer mixture thus prepared had an average syndiotacticity of less than 85%. The polymer mixture was extracted for 24 hours with boiling methyl ethyl ketone. During this treatment 39 %w

of the polymer mixture dissolved. The extract of the methyl ethyl ketone extraction was evaporated in vacuo to dryness and the remaining polymer mixture was dried at a pressure of 125 mbar and a temperature of 60 °C. X-ray analysis showed that this polymer mixture had a very low crystallinity. Subsequently, the residue of the methyl ethyl ketone extraction was extracted for 12 hours with methyl isobutyl ketone. During this treatment, 3.9 %w of the polymer mixture dissolved.

With the aid of $^{13}C$-NMR analysis it was established that the syndiotactic polymer mixture obtained as residue in the methyl isobutyl ketone extraction had an average syndiotacticity of more than 90%. X-ray analysis showed that this polymer mixture was highly crystalline. Some of the properties of the prepared syndiotactic polymer mixture are listed hereafter.

1) Average molecular weight (Mn) measured with the aid of vapour pressure osmometry in ortho-chlorophenol at 80 °C: 3200.

2) Melting point, 290-310 °C.

3) Density, 1.25 g/ml.

4) Insoluble in the following solvents: n-hexane, diethyl ether, methanol, water, benzene, ethyl acetate, chloroform, tetrahydrofuran, 1,4-dioxane, methyl ethyl ketone and methyl isobutyl ketone.

5) Partially soluble in boiling dichloromethane.

6) Soluble in dimethyl formamide, dimethyl sulphoxide and ortho-dichlorobenzene at the boiling temperature of these solvents.

7) Soluble in ortho-chlorophenol and hexafluoroisopropanol.

8) In the $^{13}C$-NNR spectrum recorded in hexafluoroisopropanol at room temperature (internal standard TMS, field stabilization $D_2O$ in cappilary) the following relative intensities were observed

136.8 ppm 1
137.3 ppm 0.1
137.7 ppm 0.08
138.2 ppm 0.00

9) In the infrared spectrum the following intensities were observed

2950 $cm^{-1}$ weak
1407 $cm^{-1}$ moderate
1392 $cm^{-1}$ shoulder
1293 $cm^{-1}$ moderate
1200 $cm^{-1}$ shoulder
895 $cm^{-1}$ weak
626 $cm^{-1}$ weak
605 $cm^{-1}$ weak

## Example 3

A carbon monoxide/styrene polymer mixture was prepared substantially in the same way as in Example 1, except for the following differences

a) the catalyst solution comprised 0.2 mmol of palladium acetate instead of palladium trifluoroacetate, 6 mmol of 2,2′-bipyridine instead of 0.3 mmol and 4 mmol of para-toluenesulphonic acid instead of 0.15 mmol, and

b) the reaction time was 5 hours instead of 3 hours.

The product was 47.60 g of a polymer mixture. With the aid of $^{13}C$-NMR analysis, it was established that the syndiotactic polymer mixture thus prepared had an average syndiotacticity of less than 85%. The polymer mixture had an intrinsic viscosity, measured in ortho-chlorophenol at 60 °C, of 0.121 dl/g. The polymer mixture was extracted substantially in the same way as the polymer mixture of Example 1, the difference being that at the end, an additional extraction with 1,4-dioxane was performed for 24 hours. During the various extractions, the following quantities of polymer mixture dissolved

2.3 %w during the methanol extraction,
10.6 %w during the methyl ethyl ketone extraction, and
29.8 %w during the 1,4-dioxane extraction.

The extract of the methyl ethyl ketone extraction was evaporated in vacuo to dryness and the remaining polymer mixture was dried at a pressure of 125 mbar and a temperature of 60 °C. X-ray analysis showed that this polymer mixture had a very low crystallinity. The polymer mixture that was obtained as the residue in the 1,4-dioxane extraction had an average molecular weight (Mn) of 8800, determined with the aid of vapour pressure osmometry in ortho-chlorophenol at 80 °C. X-ray analysis showed that this polymer

mixture was highly crystalline. With the aid of $^{13}C$-NMR analysis it was established that the syndiotactic polymer mixture thus obtained had an average syndiotacticity of more than 90%.

Example 4

A carbon monoxide/styrene polymer mixture was prepared substantially in the same way as in Example 1, except for the following differences

a) the catalyst solution comprised 0.2 mmol of palladium acetate instead of palladium trifluoro acetate, 0.6 mmol of para-toluenesulphonic acid instead of 0.15 mmol and 4 mmol of 1,4-benzoquinone instead of 20 mmol,

b) the reaction temperature was 50 °C instead of 70 °C, and

c) the reaction time was 24 hours instead of 3 hours.

The product was 13.68 g of a polymer mixture. With the aid of $^{13}C$-NMR analysis, it was established that the syndiotactic polymer mixture thus prepared had an average syndiotacticity of less than 85%. The polymer mixture was extracted in the same way as the polymer mixture of Example 3.

The polymer mixture obtained during the dioxane extraction had an average molecular weight (Mn) of 15500, determined with the aid of vapour pressure osmometry in ortho-chlorophenol at 80 °C. X-ray analysis showed that this polymer mixture was highly crystalline. With the aid of $^{13}C$-NMR analysis it was established that the syndiotactic polymer mixture thus obtained had an average syndiotacticity of more than 90%.

Example 5

When an isotactic mixture of linear alternating CO/propene copolymers, which copolymers differ from one another in stereoregularity, is subjected to a similar extraction procedure as given in Example 1, this likewise will lead to an increase in the average stereoregularity of the copolymer mixture.

## Claims

1. Process for increasing the stereoregularity of a syndiotactic or isotactic polymer mixture, characterized in that the average stereoregularity of a syndiotactic or isotactic mixture of linear alternating copolymers of carbon monoxide with a monomer of the general formula $CH_2=CH-R$, wherein R represents an optionally polarly substituted hydrocarbyl group, which copolymers differ from one another in stereoregularity, is increased by treating the polymer mixture with a solvent (hereinafter to be referred to as selective solvent) in which the copolymers display a higher degree of solubility according as their stereoregularity is lower.

2. Process as claimed in claim 1, characterized in that it is carried out by extracting the polymer mixture with a selective solvent, in which process the polymer molecules with relatively the lowest stereoregularities dissolve and in which process the product obtained upon removal of the solution obtained is a polymer mixture which has a higher average stereoregularity than the original polymer mixture.

3. Process as claimed in claim 1, characterized in that it is carried out by completely dissolving the polymer mixture and then adding a selective solvent to the solution thus obtained, in which process the polymer molecules with the highest stereoregularity precipitate from the solution and in which process the product obtained upon removal of the remainder of the solution is a polymer mixture which has a higher average stereoregularity than the initial polymer mixture.

4. Process as claimed in any of claims 1-3, characterized in that the treatment of the polymer mixture is carried out in two or more steps, in which different treating temperatures and/or different selective solvents may be employed.

5. Process as claimed in any of claims 1-4, characterized in that one or more of the following selective solvents are used: ketones, such as acetone, methyl ethyl ketone and methyl isobutyl ketone, cyclic ethers, such as tetrahydrofuran and dioxane, aromatic hydrocarbons, such as benzene, halogenated hydrocarbons, such as chloroform, and esters, such as ethyl acetate.

6. Process as claimed in claim 3, characterized in that ortho-chlorophenol or hexafluoroisopropanol is used to dissolve the polymer mixture completely.

7. Process as claimed in any of claims 1-6, characterized in that it is applied to a polymer mixture from which relatively low molecular weight material has been removed in advance by extracting the polymer

mixture with a lower aliphatic alcohol, such as methanol, at the boiling temperature of the lower aliphatic alcohol.

8. Process as claimed in any of claims 1-7, characterized in that it is applied to a syndiotactic mixture of $CO/CH_2=CH-R$ copolymers in which R represents an optionally polarly substituted aromatic hydrocarbyl group.

9. Process as claimed in any of claims 1-7, characterized in that it is applied to an isotactic mixture of $CO/CH_2=CH-R$ copolymers in which R represents an optionally polarly substituted aliphatic hydrocarbyl group.

10. Syndiotactic mixtures of linear alternating polymers of carbon monoxide with a monomer of the general formula $CH_2=CH-R$ wherein R represents an optionally polarly substituted aromatic hydrocarbyl group which mixtures have an average syndiotacticity of at least 90%.